# EUROPÄISCHE PATENTSCHRIFT

(11) **EP 0 849 487 B1**
(45) Veröffentlichungstag und Bekanntmachung des Hinweises auf die Patenterteilung: **27.03.2002**
(21) Anmeldenummer: 97121039.8
(22) Anmeldetag: 01.12.1997
(51) Int. Cl.: F16D 65/12

(54) **Anordnung einer Bremsscheibe an einer Radnabe**
Brake disc mounting on a wheel hub
Montage d'un disque de frein sur un moyeu de roue

(30) Priorität: 18.12.1996 DE 19652694
(43) Veröffentlichungstag der Anmeldung: 24.06.1998
(73) Patentinhaber: BPW Bergische Achsen Kommanditgesellschaft, 51674 Wiehl (DE)
(72) Erfinder: Ebbinghaus, Wilfried, D-51674 Wiehl (DE)
(74) Vertreter: Stenger, Watzke & Ring Patentanwälte

(56) Entgegenhaltungen:
- EP-A- 0 235 382
- EP-A- 0 703 130
- WO-A-97/48919
- DE-A- 4 230 012
- DE-A- 4 338 593
- FR-A- 2 264 285
- GB-A- 2 013 804
- GB-A- 2 021 218
- US-A- 3 946 837
- PATENT ABSTRACTS OF JAPAN vol. 010, no. 207 (M-500), 19. Juli 1986 (1986-07-19) & JP 61 048622 A (DIA HITOKO KONPOJITSUTO), 10. März 1986 (1986-03-10)

## Beschreibung

Die Erfindung betrifft die Anordnung einer einen Reibring aufweisenden Bremsscheibe an einer Radnabe, die drehbar auf einem Achsschenkel montierbar ist, wobei die Radnabe mit einem Radflansch zur lösbaren Befestigung eines Rades versehen ist und die Bremsscheibe unverdrehbar, aber lösbar über axial verlaufende Vorsprünge und/oder Vertiefungen formschlüssig mit der Radnabe verbunden ist. Eine solche Anordnung ist beispielsweise aus EP-A-0 235 382 bekannt.

Bei den bekannten Ausführungen ist die Bremsscheibennabe in Richtung auf den Radflansch der Nabe verlängert und mit einem radial abstehenden Befestigungsflansch ausgebildet, über den die Bremsscheibe entweder mittels der Radbolzen oder mittels separater Befestigungsbolzen mit dem Radflansch der Radnabe lösbar verbunden wird. Hierdurch ergibt sich der Nachteil, daß für einen Wechsel der Bremsbeläge das Rad (oder bei Zwillingsbereifung die Räder) demontiert werden muß, um Zugang zu den Bremsbelägen zu erhalten. Bei einem Bremsscheibenwechsel sind außerdem die Radbolzen bzw. die Befestigungsbolzen zu entfernen und der Bremssattel zumindest teilweise zu demontieren. Während die Radbolzen bzw. Befestigungsbolzen verhältnismäßig einfach zu entfernen sind, ergeben sich erhebliche Schwierigkeiten bei der anschließenden Wiedermontage, da für das Einpressen der entfernten Bolzen kaum Montageraum zur Verfügung steht.

Außer diesen aufwendigen Arbeiten beim Belag- oder Scheibenwechsel besitzt die bekannte Konstruktion den Nachteil, daß die topfförmige Ausbildung der Bremsscheibennabe mit anschließendem Befestigungsflansch zu einer großen Materialansammlung auf der einen Seite der Bremsscheibe führt, die bei der Erwärmung der Bremsscheibe beim Bremsen eine einseitige thermische Verformung der Bremsscheibe zur Folge hat, die sich schirmartig darstellt.

Ausgehend von dem bekannten Stand der Technik liegt der Erfindung die **Aufgabe** zugrunde, die eingangs beschriebene Anordnung einer Bremsscheibe an einer Radnabe derart weiterzubilden, daß bei gleichzeitiger Vereinfachung des Wechselns der Bremsbeläge und Bremsscheibe eine einseitige thermische Belastung der Bremsscheibe vermieden wird.

Diese Aufgabe wird durch die Merkmale des kennzeichnenden Teils des Anspruchs 1 gelöst.

Mit der erfindungsgemäßen Weiterbildung entfällt die einseitige, in einem radial abstehenden Befestigungsflansch endende Verlängerung der Bremsscheibennabe, da diese unmittelbar über axial verlaufende Vorsprünge und/oder Vertiefungen mit einer axialen Verlängerung des Radnabenhalses formschlüssig verbunden wird. Hierdurch ergibt sich nicht nur eine einfachere und preiswerter herzustellende Bremsscheibenausführung, sondern auch der Wegfall einer einseitigen Materialanhäufung und damit einer einseitigen thermischen Belastung der Bremsscheibe. Weiterhin wird es möglich, nach einer Positionierung der Bremsscheibe die Radnabe zusammen mit dem Rad vom Achsschenkel abzuziehen, so daß anschließend die Bremsklötze problemlos gewechselt werden können. Sofern für die Lagerung der Radnabe auf dem Achsschenkel eine Konstruktion gewählt wird, die eine Demontage und Montage der Nabeneinheit mittels der Achsmutter gestattet, ergibt sich eine weitere erhebliche Vereinfachung für den Bremsklotzwechsel.

Um die notwendigen Flächen für die Übertragung des Bremsmomentes von der Bremsscheibe auf die Radnabe zu schaffen, ist gemäß einem Merkmal der Erfindung die Bremsscheibennabe in Richtung auf den Radflansch der Radnabe mit einer axialen Verlängerung versehen.

Gemäß einem weiteren Merkmal ist die Bremsscheibennabe auf der Verlängerung des Radnabenhalses in axialer Richtung durch einen Haltering festgelegt, der an der Stirnfläche des Radnabenhalses lösbar befestigt ist. Da die Übertragung des Bremsmomentes zwischen Bremsscheibe und Radnabe über die axial verlaufenden Vorsprünge und/oder Vertiefungen erfolgt, dient der Haltering ausschließlich der axialen Lagesicherung der Bremsscheibe an der Radnabe, so daß für die Befestigung des Halteringes an der Stirnfläche des Radnabenhalses wenige Schrauben genügen.

Um eine unerwünschte Erwärmung des Halteringes durch Einleitung von Wärme aus der Bremsscheibennabe zu verhindern, kann gemäß einem weiteren Merkmal der Erfindung die Anlagefläche des Halteringes an der Stirnfläche der Bremsscheibennabe auf einen schmalen Ring begrenzt sein. Da bis auf diesen schmalen Ring zwischen der Stirnfläche der Bremsscheibennabe und dem Flansch des Halteringes ein Luftspalt entsteht, reduziert sich die Einleitung von Wärme aus der Bremsscheibe in den Haltering auf ein vertretbares Maß.

Mit der Erfindung wird weiterhin vorgeschlagen, den Haltering zugleich als Polring für ein ABS-System auszubilden. Hierdurch entfällt ein bisher notwendiges zusätzliches Bauteil.

Mit der Erfindung wird schließlich vorgeschlagen, den Reibring der Bremsscheibe in an sich bekannter Weise mit einem zentralen Kühlkanal und mit in beiden Stirnflächen mündenden Kühllufteintrittsöffnungen zu versehen, um eine gute Kühlung des Reibringes zu erzielen.

Auf der Zeichnung ist ein Ausführungsbeispiel der Erfindung dargestellt, und zwar zeigt:
- Fig. 1: einen Längsschnitt durch eine drehbar auf einem Achsschenkel angeordnete Radnabe mit an der Radnabe befestigter Bremsscheibe,
- Fig. 2: einen nur hälfig dargestellten Querschnitt durch die Bremsscheibe gemäß der Schnittlinie II-II in Fig. 1 und

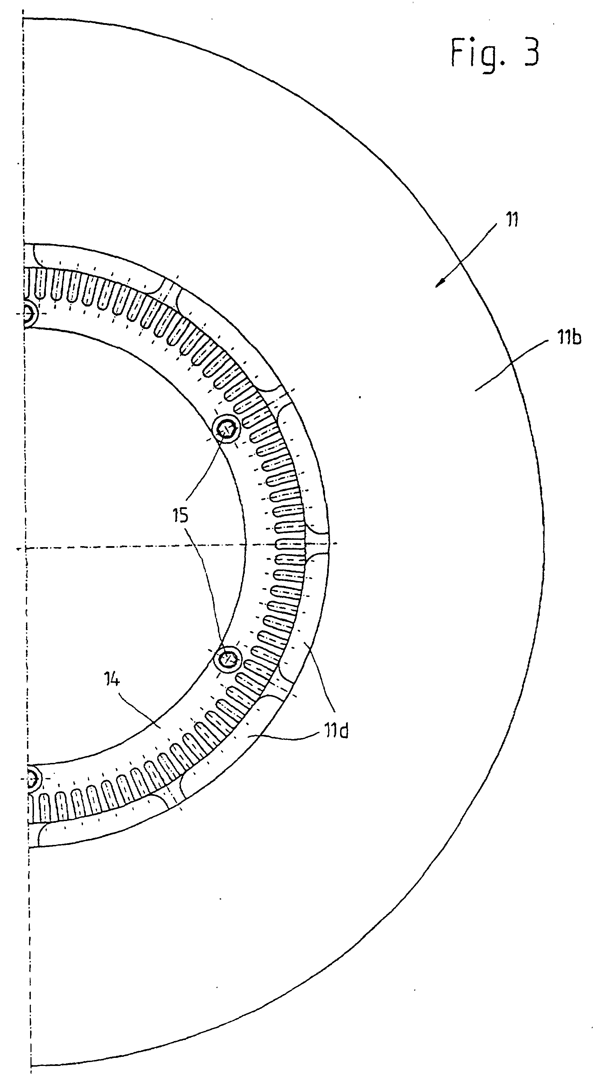

- Fig. 3: eine ebenfalls nur hälftig dargestellte rückwärtige Ansicht gemäß dem Pfeil III in Fig. 1.

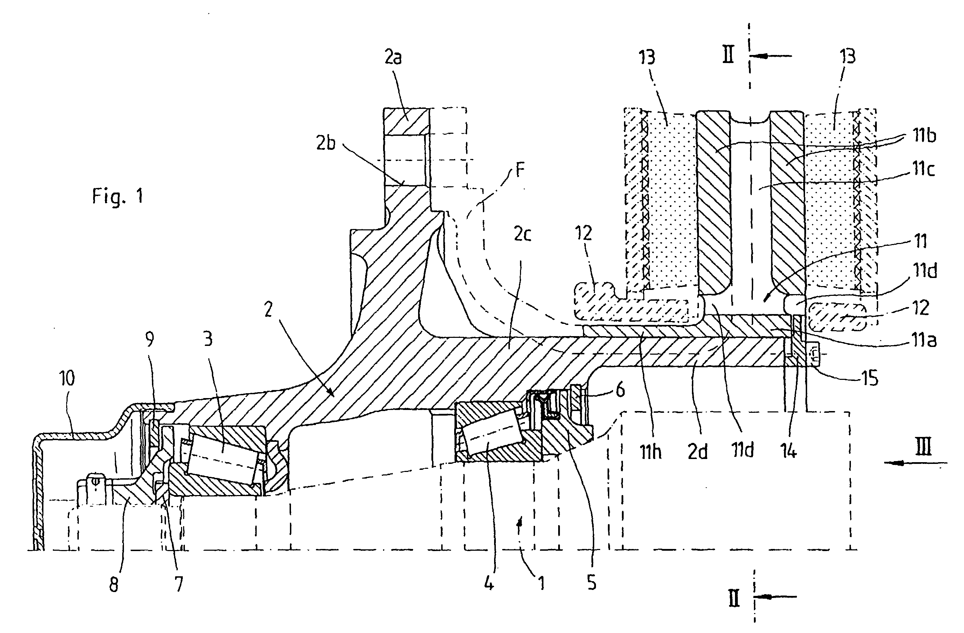

Mit strichpunktierten Linien ist in Fig. 1 ein Achsschenkel 1 dargestellt, auf dem eine Radnabe 2 drehbar gelagert ist. Die Lagerung erfolgt mittels eines vorderen und eines hinteren Wälzlagers 3 bzw. 4, die beim Ausführungsbeispiel jeweils als Kegelrollenlager ausgeführt sind, wobei das hintere Wälzlager 4 größer ist als das vordere Wälzlager 3.

Bei der in Fig. 1 dargestellten Lagerung wird der innere Lagerring des hinteren Wälzlagers 4 durch einen Stoßring 5 auf dem Achsschenkel 1 positioniert. Dieser Stoßring 5 hat einen radial nach außen abstehenden Flansch, der bis nahe an die Bohrung der Radnabe 2 heranreicht. Hinter diesem Flansch des Stoßringes 5 ist in der Radnabe 2 ein Sprengring 6 angeordnet. Der Innenring des vorderen Wälzlagers 3 wird auf dem Achsschenkel 1 unter Zwischenfügen eines Anlaufringes 7 durch eine Achsmutter 8 festgelegt, die auf einen entsprechenden Gewindeabschnitt des Achsschenkels 1 aufgeschraubt wird und wiederum mit einem bis an die Bohrung der Radnabe 1 heranreichenden Flansch versehen ist. Vor diesem Flansch der Achsmutter 8 ist wiederum ein Sprengring 9 in der Radnabe 2 angeordnet. Zum Schutz der Lagerung ist auf das vordere Ende der Radnabe 2 eine Achskappe 10 aufgeschraubt.

Die Radnabe 2 ist mit einem radial abstehenden Radflansch 2a versehen, in dem Bohrungen 2b für auf der Zeichnung nicht dargestellte Radbolzen ausgebildet sind. Mittels dieser Radbolzen wird ein Rad an der Radnabe 2 befestigt.

Mit strichpunktierten Linien ist angedeutet, wie beim Stand der Technik durch die Radbolzen zugleich ein Befestigungsflansch F einer Bremsscheibe 11 befestigt wurde, die eine Bremsscheibennabe 11a und einen Reibring 11b umfaßt. Weiterhin sind mit strichpunktierten Linien ein Bremssattel 12 und zwei Bremsklötze 13 angedeutet. Zur besseren Kühlung ist der Reibring 11b der Bremsscheibe 11 mit einem zentralen Kühlkanal 11c und mit in beiden Stirnflächen mündenden Kühllufteintrittsöffnungen 11d versehen.

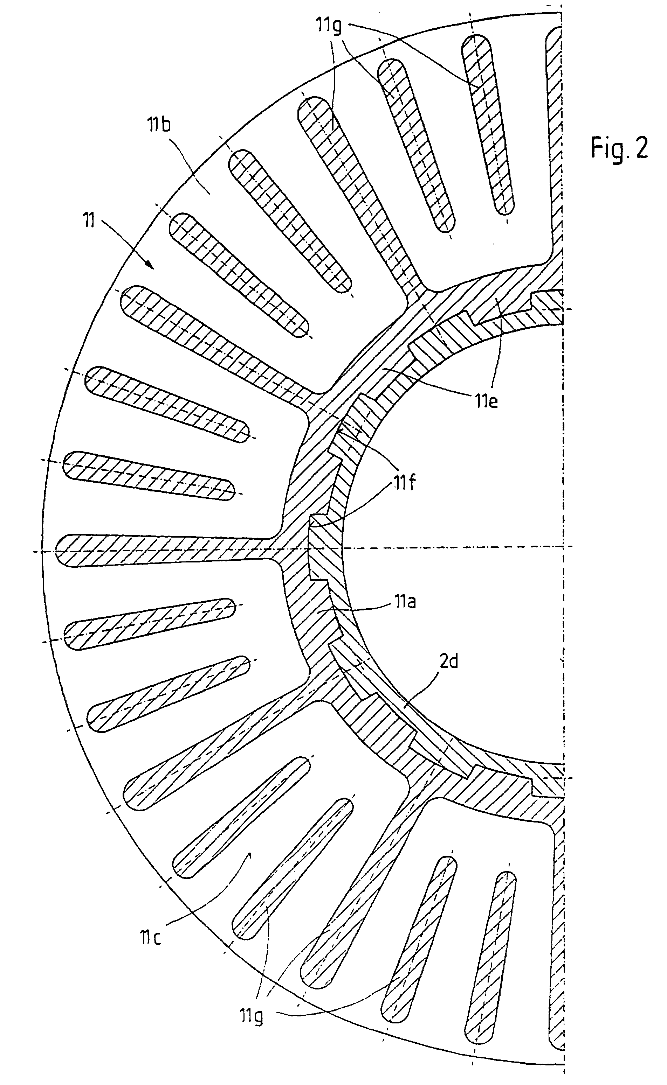

Im Gegensatz zum bekannten Stand der Technik wird die Bremsscheibennabe nicht mittels eines strichpunktiert eingezeichneten Befestigungsflansches F mit dem Radflansch 2a der Radnabe 2 drehfest verbunden, sondern durch axial verlaufende Vorsprünge und/oder Vertiefungen an der Innenfläche der Bremsscheibennabe 11a, die mit entsprechenden Vertiefungen und/oder Vorsprüngen einer axialen Verlängerung 2d des Radnabenhalses 2c zusammenwirken. Diese in der Art einer Keilwelle ausgebildeten Vorsprünge 11e und Vertiefungen 11f sind in Fig. 2 zu erkennen. Diese Darstellung zeigt weiterhin, daß die beiden ringförmigen Teile des Reibringes 11b innerhalb des zentralen Kühlkanals 11c durch radial verlaufende Rippen 11g miteinander verbunden sind.

Um die zur Übertragung des Bremsmomentes zwischen Bremsscheibe 11 und Radnabe 2 erforderlichen Flächen zur Verfügung zu stellen, ist beim dargestellten Ausführungsbeispiel die Bremsscheibennabe 11a in Richtung auf den Radflansch 2a der Radnabe 2 mit einer axialen Verlängerung 11h versehen. Hierdurch ergeben sich ausreichend große Flächen für die formschlüssige Verbindung zwischen Bremsscheibe 11 und Radnabe 2 in Umfangsrichtung. Die axiale Festlegung der Bremsscheibe 11 an der Radnabe 2 erfolgt mittels eines Halteringes 14, der beim Ausführungsbeispiel durch sechs Schrauben 15 an der Stirnfläche der axialen Verlängerung 2d der Radnabe 2 befestigt wird und mit einer schmalen ringförmigen Anlagefläche an der Stirnfläche der Bremsscheibennabe 11a anliegt. Bis auf diese schmale ringförmige Anlagefläche des Halteringes 14 an der Stirnfläche der Bremsscheibennabe 11a wird zwischen diesen beiden Teilen ein Luftspalt gebildet, so daß die Übertragung von Wärme von der Bremsscheibe 11 auf den Haltering 14 auf zulässige Werte beschränkt wird.

Um verschlissene Bremsklötze 13 zu entfernen und durch neue Bremsklötze 13 zu ersetzen, wird als erstes der Haltering 14 durch Herausdrehen der Schrauben 15 gelöst. Anschließend wird die Bremsscheibe 11 in ihrer Position auf geeignete Weise fixiert. Nunmehr wird nach Abschrauben der Achskappe 10 und Entsichern der Achsmutter 8 die Achsmutter 8 gedreht. Hierbei zieht die Achsmutter 8 über ihren am Sprengring 9 anliegenden Flansch die Radnabe 2 vom Achsschenkel 1 ab, wobei über den hinteren Sprengring 6 und den Stoßring 5 auch das hintere Wälzlager 4 mitgenommen wird. Da das am Randflansch 2a befestigte Rad beim Abziehen der Radnabe 2 vom Achsschenkel 1 an der Radnabe 2 verbleibt, liegt anschließend die Scheibenbremse zum Austausch der Bremsklötze 13 frei.

Nach dem Austausch der Bremsklötze 13 ist es lediglich erforderlich, beim Aufziehen der Radnabe 2, das wiederum mit Hilfe der Achsmutter 8 erfolgt, darauf zu achten, daß die Vorsprünge 11e und Vertiefungen 11f der Bremsscheibe 11 ordnungsgemäß in die entsprechenden Vertiefungen bzw. Vorsprünge der Verlängerung 2d des Radnabenhalses 2c der Radnabe 2 eingreifen. Sobald die Radnabe 2 ihre ordnungsgemäße Lage auf dem Achsschenkel 1 erreicht hat, wird die Achsmutter 8 gesichert, die Achskappe 10 aufgeschraubt, der Haltering 14 mit Hilfe der Schrauben 15 befestigt und die für den Bremsklotzwechsel erfolgte Festlegung der Bremsscheibe 11 aufgehoben.

Aus den voranstehenden Darlegungen geht hervor, daß sich das Auswechseln der Bremsklötze 13 erheblich erleichtert. Weiterhin ist zu erkennen, daß durch den Wegfall des strichpunktierten eingezeichneten Befestigungsflansches F eine einfacherere Konstruktion der Bremsscheibe 11 geschaffen wird, wobei gleichzeitig einseitige Materialanhäufungen vermieden werden, die zu einer einseitigen thermischen Belastung des Reibringes 11b der Bremsscheibe 11 führen.

### Bezugszeichenliste

- 1: Achsschenkel
- 2: Radnabe
- 2a: Radflansch
- 2b: Bohrung
- 2c: Radnabenhals
- 2d: Verlängerung
- 3: Wälzlager
- 4: Wälzlager
- 5: Stoßring
- 6: Sprengring
- 7: Anlaufring
- 8: Achsmutter
- 9: Sprengring
- 10: Achskappe
- 11: Bremsscheibe
- 11a: Bremsscheibennabe
- 11b: Reibring
- 11c: Kühlkanal
- 11d: Kühllufteintrittsöffnung
- 11e: Vorsprung
- 11f: Vertiefung
- 11g: Rippe
- 11h: Verlängerung
- 12: Bremssattel
- 13: Bremsklotz
- 14: Haltering
- 15: Schraube
- F: Befestigungsflansch

## Patentansprüche

1. Anordnung einer einen Reibring (11b) aufweisenden Bremsscheibe (11) an einer Radnabe (2), die drehbar auf einem Achsschenkel (1) montierbar ist, wobei die Radnabe (2) mit einem Radflansch (2a) zur lösbaren Befestigung eines Rades versehen ist und die Bremsscheibe (11) unverdrehbar, aber lösbar über axial verlaufende Vorsprünge (11e) und/oder Vertiefungen (11f) formschlüssig mit der Radnabe (2) verbunden ist,
**dadurch gekennzeichnet,**
**daß** die Bremsscheibe (11) mit einer Bremsscheibennabe (11a) sowie einer sich in Richtung auf den Radflansch (2a) anschließenden axialen Verlängerung (11h) und die Radnabe (2) mit einer sich an den Radnabenhals (2c) anschließenden axialen Verlängerung (2d) versehen und die Vorsprünge (11e) und/oder Vertiefungen (11f) zur formschlüssigen Verbindung von Bremsscheibe (11) und Radnabe (2) über die gesamte axiale Länge der Verlängerungen (2d, 11h) ausgebildet sind.

2. Anordnung nach Anspruch 1, **dadurch gekennzeichnet, daß** die Bremsscheibennabe (11a) auf der Verlängerung (2d) des Radnabenhalses (2c) in axialer Richtung durch einen Haltering (14) festgelegt ist, der an der Stirnfläche des Radnabenhalses (2c) lösbar befestigt ist.

3. Anordnung nach Anspruch 2, **dadurch gekennzeichnet, daß** die Anlagefläche des Halteringes (14) an der Stirnfläche der Bremsscheibennabe (11a) auf einen schmalen Ring begrenzt ist.

4. Anordnung nach Anspruch 2 oder 3, **dadurch gekennzeichnet, daß** der Haltering (14) als Polring für ein ABS-System ausgebildet ist.

5. Anordnung nach mindestens einem der Ansprüche 1 bis 4, **dadurch gekennzeichnet, daß** der Reibring (11b) der Bremsscheibe (11) in an sich bekannter Weise mit einem zentralen Kühlkanal (11c) und mit in beiden Stirnflächen mündenden Kühllufteintrittsöffnungen (11d) versehen ist.

## Claims

1. Arrangement of a brake disc (11), having a friction ring (11b), on a wheel hub (2) which is capable of being mounted rotatably on an axle stub (1), the wheel hub (2) being provided with a wheel flange (2a) for the releasable fastening of a wheel, and the brake disc (11) being connected positively to the wheel hub (2) non-rotatably, but releasably, via axially running projections (11e) and/or depressions (11f), **characterized in that** the brake disc (11) is provided with a brake-disc hub (11a) and with an axial extension (11h) adjoining in the direction of the wheel flange (2a) and the wheel hub (2) is provided with an axial extension (2d) adjoining the wheel-hub neck (2c), and the projections (11e) and/or depressions (11f) for the positive connection of the brake disc (11) and the wheel hub (2) are formed over the entire axial length of the extensions (2d, 11h).

2. Arrangement according to Claim 1, **characterized in that** the brake-disc hub (11a) is secured in the axial direction on the extension (2d) of the wheel-hub neck (2c) by a holding ring (14) which is fastened releasably to the end face of the wheel-hub neck (2c).

3. Arrangement according to Claim 2, **characterized in that** the bearing surface of the holding ring (14) on the end face of the brake-disc hub (11a) is limited to a narrow ring.

4. Arrangement according to Claim 2 or 3, **characterized in that** the holding ring (14) is designed as a pole ring for an ABS system.

5. Arrangement according to at least one of Claims 1 to 4, **characterized in that** the friction ring (11b) of the brake disc (11) is provided in a way known per se with a central cooling duct (11c) and with cooling-air inlet orifices (11d) issuing in both end faces.

## Revendications

1. Montage d'un disque de frein (11) présentant une bague de friction (11b) sur un moyeu de roue (2) qui peut être monté de manière rotative sur une fusée (1), le moyeu de roue (2) étant muni d'une bride de roue (2a) pour la fixation amovible d'une roue et le disque de frein (11) étant relié de manière résistante à la torsion, mais pourtant amovible par engagement positif avec le moyeu de roue (2), par l'intermédiaire de saillies (11e) et/ou de creux (11f), disposés radialement,
**caractérisé en ce que** le disque de frein (11) est muni d'un moyeu de disque de frein (11a) et d'un prolongement axial (11h) adjacent, dans la direction de la bride de roue (2a) et **en ce que** le moyeu de roue (2) est muni d'un prolongement axial (2d) adjacent à la gorge du moyeu de roue (2c) et **en ce que** les saillies (11e) et/ou les creux (11f) pour la liaison par engagement positif entre le disque de frein (11) et le moyeu de roue (2) sont prévus sur toute la longueur axiale des prolongements (2d, 11h).

2. Montage selon la revendication 1, **caractérisé en ce que** le moyeu du disque de frein (11a) est fixé en direction axiale sur le prolongement (2d) de la gorge (2c) du moyeu de roue par une bague de maintien (14) qui est fixée de manière amovible sur la surface frontale de la gorge (2c) du moyeu de roue.

3. Montage selon la revendication 2, **caractérisé en ce que** la surface d'application de la bague de maintien (14) sur la surface frontale du moyeu du disque de frein (11a) se limite en un anneau étroit.

4. Montage selon l'une quelconque des revendications 2 ou 3, **caractérisé en ce que** la bague de maintien (14) est conçue sous forme d'une bague polaire pour un système ABS.

5. Montage selon au moins l'une quelconque des revendications 1 à 4, **caractérisé en ce que** la bague de friction (11b) du disque de frein (11) est munie de manière connue en soi d'un conduit de refroidissement central (11c) et d'orifices d'admission de l'air de refroidissement (11d) qui débouchent dans les deux surfaces frontales.
